# EUROPEAN PATENT APPLICATION

(11) **EP 4 841 655 A1**
(43) Date of publication of application: **18.11.2026**
(21) Application number: 24917121.6
(22) Date of filing: 24.10.2024
(51) Int. Cl.: G21K 1/06, G02B 5/18, G21K 1/00

(54) **X-RAY SPECTROMETER**

(30) Priority: 11.01.2024 JP 2024002452
(71) Applicant: SHIMADZU CORPORATION, Kyoto-shi, Kyoto 604-8511 (JP)
(72) Inventor: UENO, Yoshihiro, Kyoto-shi, Kyoto 604-8511 (JP)
(74) Representative: Müller-Boré & Partner Patentanwälte PartG mbB
(86) International application number: PCT/JP2024/037847
(87) International publication number: WO 2025/150247

(57) **Abstract**

A first diffraction grating (11) is installed at a first position (P1) and diffracts and disperses an X-ray from an X-ray source (3). A second diffraction grating (12) is installed at a second position (P2) and diffracts and disperses the X-ray from the X-ray source (3). A blocking unit (41, 42) is configured to be capable of blocking a first optical path (71) of the X-ray from the X-ray source (3) that is diffracted by the first diffraction grating (11) and is incident on a detector, and a second optical path (72) of the X-ray from the X-ray source (3) that is diffracted by the second diffraction grating (12) and is incident on the detector (2). A control device (91) controls the blocking unit (41, 42) to selectively block one of the first optical path (71) and the second optical path (72).

## Description

### Technical Field

The present disclosure relates to an X-ray spectrometer.

### Background Art

In the spectroscopy of light in the X-ray region, it is difficult to separate a wide wavelength region with a single diffraction grating from the viewpoint of resolution, diffraction efficiency, and the like, and it is general to use a plurality of diffraction gratings.

Japanese Patent No. 5948558 (Patent Document 1) discloses a method of mechanically switching positions of a plurality of diffraction gratings for use.

### Citation List

### Patent Literature

Patent Document 1: Japanese Patent No. 5948558

### Summary of Invention

### Technical Problem

However, mechanically switching the positions of the diffraction gratings requires an interruption of measurement. The interruption of measurement causes a decrease in measurement throughput. Furthermore, since a mechanical structure for switching the positions of the diffraction gratings is complicated, a highly accurate design and manufacturing technique is required, and a burden in terms of cost is large. To solve the above problems, there has been a demand for a technique capable of improving measurement throughput by using a plurality of diffraction gratings for measurement without mechanically switching the positions of the plurality of diffraction gratings.

The present disclosure has been made to solve such a problem, and an object thereof is to perform a spectroscopic measurement using a plurality of diffraction gratings without mechanically switching the positions of the plurality of diffraction gratings.

### Solution to Problem

A first aspect of the present invention relates to an X-ray spectrometer including a first diffraction grating, a second diffraction grating, a detector, a blocking unit, and a control device. The first diffraction grating is installed at a first position, and diffracts and disperses an X-ray from an X-ray source. The second diffraction grating is installed at a second position, and diffracts and disperses the X-ray from the X-ray source. The detector detects the X-ray diffracted and dispersed by each of the first diffraction grating and the second diffraction grating. The blocking unit is configured to be capable of blocking a first optical path of the X-ray from the X-ray source that is diffracted by the first diffraction grating and is incident on the detector, and a second optical path of the X-ray from the X-ray source that is diffracted by the second diffraction grating and is incident on the detector. The control device controls the blocking unit to selectively block one of the first optical path and the second optical path.

### Advantageous Effects of Invention

According to the present disclosure, it is possible to perform a spectroscopic measurement using a plurality of diffraction gratings without mechanically switching the positions of the plurality of diffraction gratings.

### Brief Description of Drawings

[FIG. 1] FIG. 1 is a schematic diagram showing a configuration of an X-ray spectrometer according to Embodiment 1.
[FIG. 2] FIG. 2 is a diagram for explaining a first state.
[FIG. 3] FIG. 3 is a diagram for explaining a second state.
[FIG. 4] FIG. 4 is a schematic diagram showing a configuration of an X-ray spectrometer according to Embodiment 2.
[FIG. 5] FIG. 5 is a schematic diagram showing a configuration of an X-ray spectrometer according to Modification 1.
[FIG. 6] FIG. 6 is a schematic diagram showing a configuration of an X-ray spectrometer according to Modification 2.

### Description of Embodiments

Hereinafter, embodiments of the present invention will be described in detail with reference to the drawings. Note that the same or corresponding parts in the drawings are denoted by the same reference numerals, and the description thereof will not be repeated.

### [X-Ray Spectrometer According to Embodiment 1]

An X-ray spectrometer 100 according to Embodiment 1 includes a plurality of diffraction gratings, a detector 2, and a blocking unit. The X-ray spectrometer 100 may be used as a part of an X-ray analysis apparatus including an X-ray spectrometer, such as an SEM (Scanning Electron Microscope) or an EPMA (Electron Probe Micro Analyzer).

In one embodiment, the plurality of diffraction gratings includes a first diffraction grating 11 and a second diffraction grating 12. In another embodiment, the plurality of diffraction gratings may include three or more diffraction gratings.

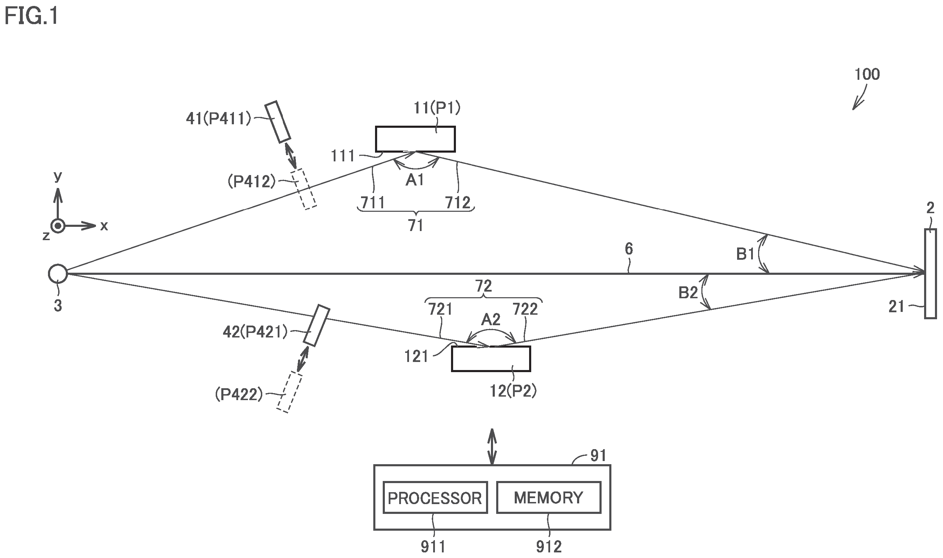

In the example of FIG. 1, for convenience of explanation, a position of an X-ray source 3 is defined as an origin, a direction parallel to a straight line 6 connecting the X-ray source 3 to the detector 2 is defined as a positive X-axis direction, and a plane on which the X-ray source 3, the detector 2, the first diffraction grating 11, and the second diffraction grating 12 exist is defined as an XY plane. A direction orthogonal to the XY plane is defined as a Z-axis direction. The positional relationship between the XY plane and the direction of gravity is not particularly limited. For example, the first diffraction grating 11 and the second diffraction grating 12 may be arranged vertically along the direction of gravity, may be arranged horizontally perpendicular to the direction of gravity, or may be arranged in other positional relationships. Moreover, the plane on which the X-ray source 3, the detector 2, and the first diffraction grating 11 exist and the plane on which the X-ray source 3, the detector 2, and the second diffraction grating 12 exist may be the same or different.

The first diffraction grating 11 is installed at a first position P1, and diffracts and disperses the X-ray from the X-ray source 3. More specifically, the first diffraction grating 11 is configured to diffract and disperse the X-ray from the X-ray source 3 at a first diffraction angle A1. The first diffraction grating 11 has a grating surface 111 for diffracting and dispersing the X-ray. More specifically, the first diffraction grating 11 is fixed at the first position P1 which is a specific coordinate position satisfying a condition "diffracting and dispersing the X-ray from the X-ray source 3 at the first diffraction angle A1" in the X-ray spectrometer 100, and an angle of the grating surface 111 with respect to the straight line 6 is also fixed at an angle satisfying the condition.

The second diffraction grating 12 is installed at a second position P2, and diffracts and disperses the X-ray from the X-ray source 3. More specifically, the second diffraction grating 12 is configured to diffract and disperse the X-ray from the X-ray source 3 at a second diffraction angle A2. The second diffraction grating 12 has a grating surface 121 for diffracting and dispersing the X-ray. More specifically, the second diffraction grating 12 is fixed at the second position P2 which is a specific coordinate position satisfying a condition "diffracting and dispersing the X-ray from the X-ray source 3 at the second diffraction angle A2" in the X-ray spectrometer 100, and an angle of the grating surface 121 with respect to the straight line 6 is also fixed at an angle satisfying the condition.

In the present specification, the "diffraction angle" is an angle formed by the X-ray incident on the grating surfaces 111 and 121 (incident X-ray) and the X-ray resulting from diffraction of the incident X-ray by the grating surfaces 111 and 121 (diffracted X-ray). The diffraction angle is also referred to as a "deflection angle" by a person skilled in the art.

The second diffraction angle A2 is an angle different from the first diffraction angle A1. In other words, the first diffraction grating 11 and the second diffraction grating 12 have diffraction angles suitable for dispersing X-rays in energy ranges (different wavelength bands) different from each other. Therefore, by properly using the first diffraction grating 11 and the second diffraction grating 12 according to the energy range of the X-ray incident from the X-ray source 3, an X-ray having a higher output and a higher resolution than the case of using either one of the diffraction gratings can be made incident on the detector 2.

Each of the diffraction gratings 11 and 12 is preferably an unequally spaced groove diffraction grating. The grating surfaces 111 and 121 of the diffraction gratings 11 and 12 may be concave surfaces or flat surfaces. The grating surfaces 111 and 121 do not necessarily have to be on a Rowland circle. Hereinafter, the features and arrangements of the grating surfaces 111 and 121 will be described in more detail.

The unequally spaced groove diffraction grating is a diffraction grating in which grooves of the grating surfaces 111 and 121 are formed at unequal intervals. More specifically, the unequally spaced groove indirect grating is a diffraction grating in which the grooves of the grating surfaces 111 and 121 are arranged in a pattern such that the X-ray from the X-ray source 3 can be appropriately dispersed and detected on a detection surface 21 of the detector 2 no matter which position on the grating surfaces 111 and 121 the X-ray enters. As described above, by using the unequally spaced groove diffraction gratings as the diffraction gratings 11 and 12, the X-ray from the X-ray source 3 can be appropriately dispersed no matter which position on each of the grating surfaces 111 and 121 the X-ray enters. Therefore, the measurement can be performed with high accuracy.

When unequally spaced groove diffraction gratings are used as the diffraction gratings 11 and 12, a sufficient resolution can be obtained even if the X-ray from the X-ray source 3 is not imaged on the Rowland circle passing through the X-ray source 3 and the detector 2. Therefore, the grating surfaces 111 and 121 may be flat surfaces, and do not have to be located on the Rowland circle. However, since the grating surfaces 111 and 121 only need to be arranged at positions where the X-ray from the X-ray source 3 is diffracted and dispersed at the diffraction angles A1 and A2, respectively, and is incident on the detector 2, the grating surfaces 111 and 121 may be on the Rowland circle or in the vicinity of the Rowland circle as a result of being arranged at the positions.

When diffraction gratings having grooves formed at equal intervals, which have been widely used conventionally, are used as the diffraction gratings 11 and 12, the grating surfaces 111 and 121 are concave surfaces, and the concave surfaces are preferably arranged along the Rowland circle.

The X-ray source 3 is a source of the X-ray incident on the X-ray spectrometer 100. The X-ray source 3 is arranged at a position where the X-ray emitted from the X-ray source 3 is diffracted and dispersed by the diffraction gratings 11 and 12 and is incident on the detection surface 21 of the detector 2. The X-ray source may be a point light source or a surface light source.

The detector 2 detects the X-ray diffracted and dispersed by each of the first diffraction grating 11 and the second diffraction grating 12. The detector 2 has a detection surface 21 that detects the incident X-ray. The detection surface 21 detects the X-ray dispersed according to the energy value by the diffraction gratings 11 and 12 at a position according to the energy value.

In one embodiment, the X-ray source 3 is a sample containing an element to be measured. By irradiating the sample with a primary X-ray from an X-ray tube (not shown), a characteristic X-ray of the element is emitted from the sample. The characteristic X-ray is diffracted and dispersed by the diffraction gratings 11 and 12, and is imaged on the detection surface 21 at a position according to the energy value of the characteristic X-ray. An X-ray image appearing in a striped pattern at a position according to the energy value on the detection surface 21 as in the present embodiment is also referred to as a spectrum by a person skilled in the art.

In another embodiment, the X-ray source 3 is an X-ray tube that generates a primary X-ray. The primary X-ray is diffracted and dispersed by the diffraction gratings 11 and 12, and is detected on the detection surface 21 at a position according to the energy value.

To summarize the above, in the X-ray spectrometer 100, the positional relationship among the first diffraction grating 11, the detector 2, and the X-ray source 3 is determined based on the first diffraction angle A1. Further, the positional relationship among the second diffraction grating 12, the detector 2, and the X-ray source 3 is determined based on the second diffraction angle A2. In other words, the first diffraction grating 11, the second diffraction grating 12, the detector 2, and the X-ray source 3 are arranged such that each of the first diffraction grating 11 and the second diffraction grating 12 can diffract and disperse the X-ray from the X-ray source 3 at the first diffraction angle A1 and the second diffraction angle A2, respectively, and make the X-ray incident on the detector 2.

Hereinafter, an optical path of the X-ray diffracted by the first diffraction grating 11 from the X-ray source 3 and incident on the detector 2 is referred to as a first optical path 71. The first optical path 71 includes an optical path 711 from the X-ray source 3 to the first diffraction grating 11, and an optical path 712 from the first diffraction grating 11 to the detector 2. Further, an optical path of the X-ray diffracted by the second diffraction grating 12 from the X-ray source 3 and incident on the detector 2 is referred to as a second optical path 72. The second optical path 72 includes an optical path 721 from the X-ray source 3 to the second diffraction grating 12, and an optical path 722 from the second diffraction grating 12 to the detector 2.

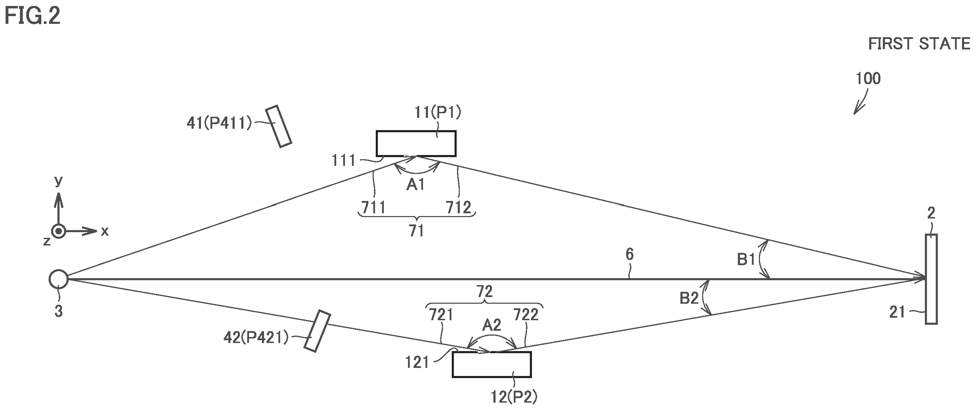

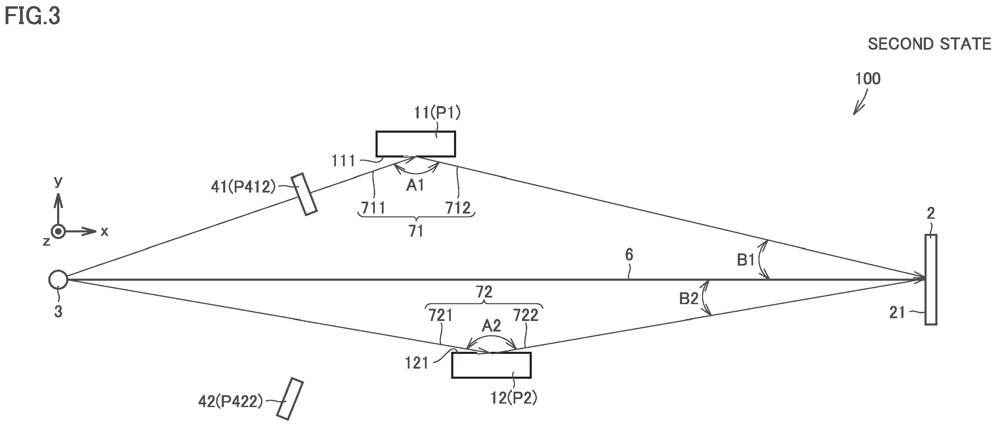

The blocking unit is configured to be capable of blocking the first optical path 71 and the second optical path 72. The blocking unit may be composed of a single member or a plurality of members. In one embodiment, the blocking unit creates a first state (FIG. 2) in which the second optical path 72 is blocked and the first optical path 71 is not blocked, and a second state (FIG. 3) in which the first optical path 71 is blocked and the second optical path 72 is not blocked. The blocking unit may block the optical path 711 or the optical path 712 in order to block the first optical path 71. The blocking unit may block the optical path 721 or the optical path 722 in order to block the second optical path 72.

In one embodiment, the blocking unit includes a first shielding plate 41 and a second shielding plate 42. In other words, the first shielding plate 41 and the second shielding plate 42 correspond to an embodiment of the "blocking unit". The first shielding plate 41 is, for example, a plate-shaped member formed of a material that does not transmit (shields) an X-ray, and can be arranged at a position P411 that does not block the first optical path 71 and a position P412 that blocks the first optical path 71. The first shielding plate 41 moves between the position P411 and the position P412 by being slid on, for example, a rail not shown.

The second shielding plate 42 is, for example, a plate-shaped member formed of a material that does not transmit (shields) an X-ray, and can be arranged at a position P421 that blocks the second optical path 72 and a position P422 that does not block the second optical path 72. The second shielding plate 42 moves between the position P421 and the position P422 by being slid on, for example, a rail not shown.

In FIG. 2, the first shielding plate 41 is arranged at the position P411, and the second shielding plate 42 is arranged at the position P421. Therefore, the first state is created in which the second optical path 72 is blocked and the first optical path 71 is not blocked.

In FIG. 3, the first shielding plate 41 is arranged at the position P412, and the second shielding plate 42 is arranged at the position P422. Therefore, the second state is created in which the first optical path 71 is blocked and the second optical path 72 is not blocked.

In one embodiment, the first state and the second state are switched by the control device 91. Note that the description of the control device 91 is omitted in FIG. 2 and subsequent figures. The control device 91 controls the blocking unit to selectively block one of the first optical path 71 and the second optical path 72. The control device 91 includes a processor 911 and a memory 912.

The processor 911 includes, for example, a CPU (Central Processing Unit). The processor 911 controls the operation of each unit of the X-ray spectrometer 100 by reading and executing a program stored in the memory 912. In one embodiment, the processor 911 controls moving mechanisms (not shown) of the first shielding plate 41 and the second shielding plate 42 to switch between the first state and the second state.

The memory 912 is realized by a nonvolatile storage device such as a ROM (Read Only Memory) or a hard disk. The memory 912 stores a program executed by the processor 911, data used by the processor 911, and the like. The program may be stored in a non-transitory computer-readable medium.

In another embodiment, the user may manually switch between the first state and the second state. For example, the user may switch the positions of the shielding plates 41 and 42 using an input device such as a lever interlocked with the shielding plates 41 and 42. For example, the shielding plates 41 and 42 are configured to move when the lever is moved by a mechanical mechanism combining the lever, a gear, a rail, and the like. However, the configuration in which the processor 911 switches between the first state and the second state by controlling the moving mechanisms of the shielding plates 41 and 42 is preferable in that it saves the user time and effort.

In the X-ray spectrometer 100, the first diffraction grating 11 having a first diffraction angle A1 of preferably 170° or more and less than 180°, and more preferably 170° or more and 179° or less is used. Further, the second diffraction grating 12 having a second diffraction angle A2 of preferably 170° or more and less than 180°, and more preferably 170° or more and 179° or less is used.

By using diffraction gratings having a diffraction angle of 170° or more and less than 180° as the diffraction gratings 11 and 12, an X-ray having a wavelength referred to as a soft X-ray can be dispersed with high output and high resolution. More specifically, an X-ray having an energy of 50 eV or more and 5 keV or less can be dispersed with high output and high resolution. Thereby, an X-ray of 4 keV or more and 5 keV or less, which could not be efficiently detected by an X-ray spectrometer using a conventionally used diffraction grating having a low reflection efficiency for an X-ray of 4 keV or more, can also be efficiently detected. The X-ray having an energy of 50 eV or more and 5 keV or less is, in other words, an X-ray having a wavelength of 0.25 nm or more and 25 nm or less.

In addition, by using diffraction gratings having a diffraction angle of 170° or more and less than 180° as the diffraction gratings 11 and 12, the X-ray can be detected with a sufficient wavelength resolution in the first state and the second state without changing the orientation of the detection surface 21 of the detector 2 in the X-ray spectrometer 100. This point will be described in more detail below.

When the first diffraction angle is 170° or more and less than or equal to 180°, an incident angle B1 of the X-ray to the detector 2 in the first state (an angle formed by the straight line 6 and the optical path 712) is about 5 degrees or less. Therefore, even if the detector 2 is arranged so that the straight line 6 and the detection surface 21 are perpendicular as shown in FIGS. 1 to 3, the spread of the spectrum on the detection surface 21 caused by the incident angle B1 is small and does not affect the wavelength resolution. Specifically, when the width of the spectrum when arranged so that the incident angle is 0° (the optical path 712 and the detection surface 21 are perpendicular) is 1, the width of the spectrum when the incident angle is 5° is 1/cosB = 1/cos(5°) = 1.00382. Therefore, when the incident angle is about 5° or less, the spread of the spectrum due to the incident angle not being 0 is only about 1.00382 times or less. Therefore, in the first state, the X-ray can be detected with a sufficient wavelength resolution without changing the orientation of the detection surface 21 of the detector 2 so that the optical path 712 and the detection surface 21 are perpendicular.

Similarly, when the second diffraction angle is 170° or more and 179° or less, in the second state, the X-ray can be detected with a sufficient wavelength resolution without changing the orientation of the detection surface 21 of the detector 2 so that the optical path 722 and the detection surface 21 are perpendicular.

As described above, in both the first state and the second state, the X-ray can be detected with a sufficient resolution even when the detector 2 is kept arranged in an orientation where the straight line 6 and the detection surface 21 shown in FIG. 2 are perpendicular to each other. Therefore, by fixing the angle of the detection surface 21 with respect to the straight line 6 connecting the X-ray source 3 and the detector 2 throughout the first state and the second state, a mechanism for changing the angle of the detection surface 21 can be omitted while maintaining a sufficient resolution. Thereby, complication of the configuration of the X-ray spectrometer 100 can be suppressed.

As described above, in the X-ray spectrometer 100 according to the present embodiment, the X-ray diffracted and dispersed by each of the plurality of diffraction gratings fixed respectively at the plurality of predetermined positions can be selectively made incident on the detector 2. Therefore, a spectroscopic measurement can be performed using a plurality of diffraction gratings without mechanically switching the positions of the plurality of diffraction gratings.

### [Comparison with Conventional X-Ray Spectrometer]

In a conventional X-ray spectrometer, as disclosed in Patent Document 1, a configuration is adopted in which positions of a plurality of diffraction gratings are mechanically switched for use. However, to mechanically switch the positions of the diffraction gratings, it is necessary to interrupt measurement. Moreover, when switching the positions of the diffraction gratings, if they are arranged deviating from positions appropriate for diffraction and dispersion, it is necessary to readjust the positions of the diffraction gratings and/or the detector. As shown in FIG. 1, the position of each diffraction grating and the angle of the grating surface with respect to the light source and the detector in the X-ray spectrometer need to be adjusted to a position and an angle satisfying the diffraction angle unique to the diffraction grating. Therefore, for a highly accurate spectroscopic measurement, the position of the diffraction grating and the angle of the grating surface must satisfy strictly set position and angle. If they deviate from the set position and angle, accurate alignment is required, which takes time and effort. As described above, in the conventional configuration, the throughput of the spectroscopic measurement may decrease.

Furthermore, in the conventional configuration, since the mechanical structure for switching the positions of the diffraction gratings is complicated, a highly accurate design and manufacturing technique is required, which causes an increase in manufacturing cost of the X-ray spectrometer.

Therefore, in the X-ray spectrometer 100 according to the present embodiment, by fixing each of the plurality of diffraction gratings at a predetermined position in the X-ray spectrometer 100 and switching the diffraction grating used for measurement using the blocking unit, X-ray measurement can be performed using a plurality of diffraction gratings without mechanically switching the positions of the plurality of diffraction gratings. Therefore, a highly accurate spectroscopic measurement can be realized in an X-ray spectrometer with a simple structure.

Even in the X-ray spectrometer 100 according to the present embodiment, as shown in FIGS. 1 to 3, it is necessary to switch the position of the blocking unit (the shielding plates 41 and 42). However, in switching the position of the blocking unit, it is only necessary to consider whether to block the optical path of the X-ray or not, and strict position adjustment is not required. Therefore, in the X-ray spectrometer 100 according to the present embodiment, there is no decrease in throughput due to detailed position adjustment of the blocking unit, and no highly accurate design and manufacturing technique is required. Furthermore, when switching the use of the diffraction gratings 11 and 12, the light from the X-ray source 3 does not leak to parts other than the diffraction gratings 11 and 12, so there is no need to stop the emission of the X-ray from the X-ray source 3 and interrupt the measurement. As described above, a decrease in throughput can be suppressed while maintaining measurement accuracy.

### [X-Ray Spectrometer According to Embodiment 2]

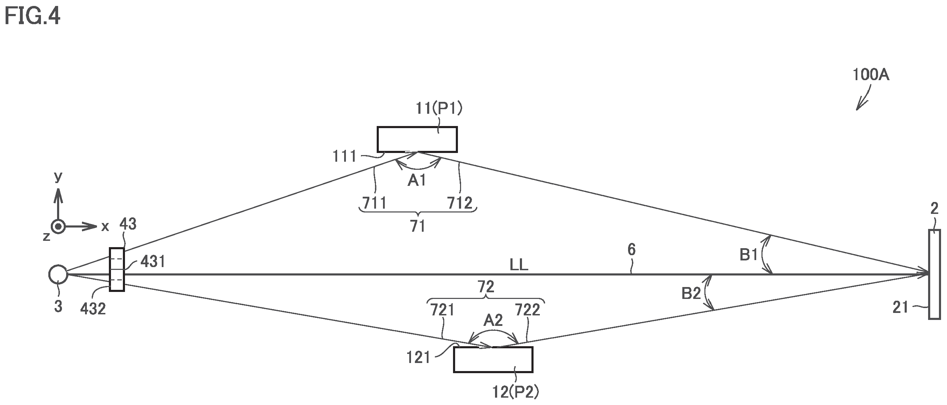

FIG. 4 is a schematic diagram showing a configuration of an X-ray spectrometer 100A according to Embodiment 2. The X-ray spectrometer 100A includes a chopper 49 as a blocking unit, instead of the shielding plates 41 and 42 in the X-ray spectrometer 100 according to Embodiment 1. In other words, the chopper 49 corresponds to an embodiment of the "blocking unit".

In one embodiment, the chopper 49 is a disk-shaped member formed of a material that does not transmit an X-ray. The chopper 49 is rotated about a central axis 491. In the chopper 49, grooves 492 are formed on a side surface of a disk in a direction from a circumference toward the central axis 491, and the grooves 492 are used as slits for allowing an X-ray to intermittently pass therethrough. As a more specific example, the chopper 49 has a shape of a general gear.

In the present embodiment, the chopper 49 is arranged at a position where the first optical path 71 and the second optical path 72 are sequentially blocked by rotating. Specifically, by rotating, the chopper 49 repeats a first state in which the second optical path 72 is blocked by the chopper 49 and the first optical path 71 passes through a slit, and a second state in which the first optical path 71 is blocked by the chopper 49 and the second optical path 72 passes through a slit.

However, the shape of the chopper 49 is not limited as long as it can create the first state in which the second optical path 72 is blocked and the first optical path 71 is not blocked, and the second state in which the first optical path 71 is blocked and the second optical path 72 is not blocked, and any shape used as a chopper by a person skilled in the art may be used.

According to the X-ray spectrometer 100A according to Embodiment 2, by rotating the chopper 49 at a predetermined speed, measurement by the first diffraction grating 11 and measurement by the second diffraction grating 12 can be continuously switched rapidly. In other words, measurement by the first diffraction grating 11 and measurement by the second diffraction grating 12 can be alternately repeated for very short times. Therefore, measurement by the first diffraction grating 11 and measurement by the second diffraction grating 12 can be performed almost without a time lag, almost simultaneously. Furthermore, there is no need to control to individually move the first shielding plate 41 and the second shielding plate 42 unlike Embodiment 1, and it is only necessary to rotate the chopper at a predetermined speed. On the other hand, in the X-ray spectrometer 100A, the grooves 492 of the chopper 49 need to be arranged so as to alternately pass the first optical path 71 and the second optical path 72, whereas in the X-ray spectrometer 100, the positioning of the first shielding plate 41 and the second shielding plate 42 is rougher, and it is only necessary to block the first optical path 71 and the second optical path 72 by arbitrary parts of the first shielding plate 41 and arbitrary parts of the second shielding plate, respectively. As described above, the X-ray spectrometer 100 has an advantage that the positioning of the blocking unit may be rougher.

### [X-Ray Spectrometer According to Modification 1]

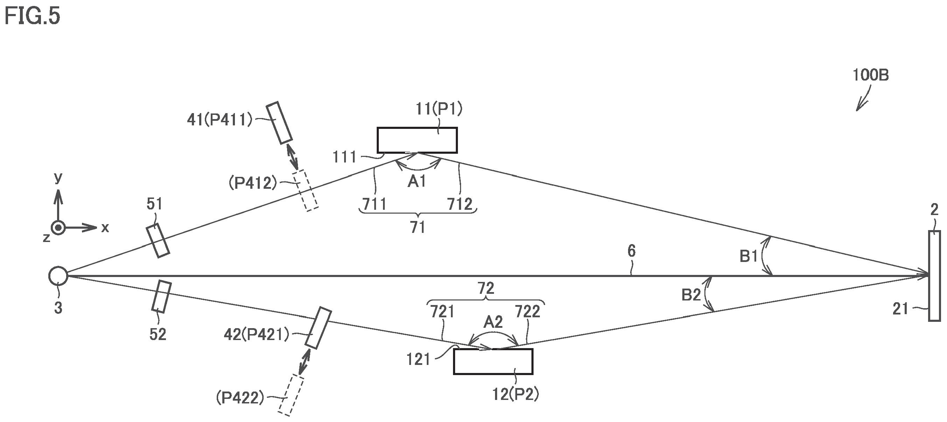

FIG. 5 is a schematic diagram showing a configuration of an X-ray spectrometer 100B according to Modification 1. The X-ray spectrometer 100B includes a first slit 51 and a second slit 52 in addition to the configuration of the X-ray spectrometer 100 according to Embodiment 1.

In one embodiment, the slits 51 and 52 are Soller slits in which a large number of thin plates formed of a material that does not transmit an X-ray are arranged in parallel at predetermined intervals. By passing an X-ray through the Soller slits, the X-ray can be restricted from diverging in a direction perpendicular to the thin plates. Therefore, if the Soller slits are used, an angle of the X-ray incident on the grating surfaces 111 and 121 can be restricted. In other words, only an X-ray incident on the grating surfaces 111 and 121 at a predetermined angle passing through the Soller slits can be allowed to pass therethrough. Furthermore, only the X-ray emitted from a predetermined position corresponding to the Soller slits in the X-ray source 3 is incident on the grating surfaces 111 and 121.

In another embodiment, the slits 51 and 52 are slits in which a hole for transmitting an X-ray is formed in a plate-shaped member formed of a material that does not transmit an X-ray. When the hole has a circular shape with a relatively small diameter, it is also referred to as a pinhole slit. When a pinhole slit is used, only an X-ray emitted from a predetermined position corresponding to the hole in the X-ray source 3 is allowed to pass therethrough, and an X-ray generated from outside the predetermined range can be blocked. Thereby, only an X-ray emitted from the predetermined position of the X-ray source 3 at a predetermined angle passing through the hole of the pinhole slit can be made incident on the grating surfaces 111 and 121.

As described above, by using the slits 51 and 52, only an X-ray emitted from a predetermined position of the X-ray source 3 at a predetermined angle can be made incident on the grating surfaces 111 and 121. Therefore, it is possible to accurately disperse an X-ray on the grating surfaces 111 and 121 according to its wavelength. Therefore, measurement accuracy in the X-ray spectrometer 100B is improved.

In particular, when the X-ray source 3 is a surface light source, X-rays generated from various positions on the surface light source can be suppressed from being incident on the grating surfaces 111 and 121 at various angles, so there is a large merit in providing the slits 51 and 52.

### [X-Ray Spectrometer According to Modification 2]

As described above, the plurality of diffraction gratings may include three or more diffraction gratings. Hereinafter, an example including three diffraction gratings will be described as Modification 2.

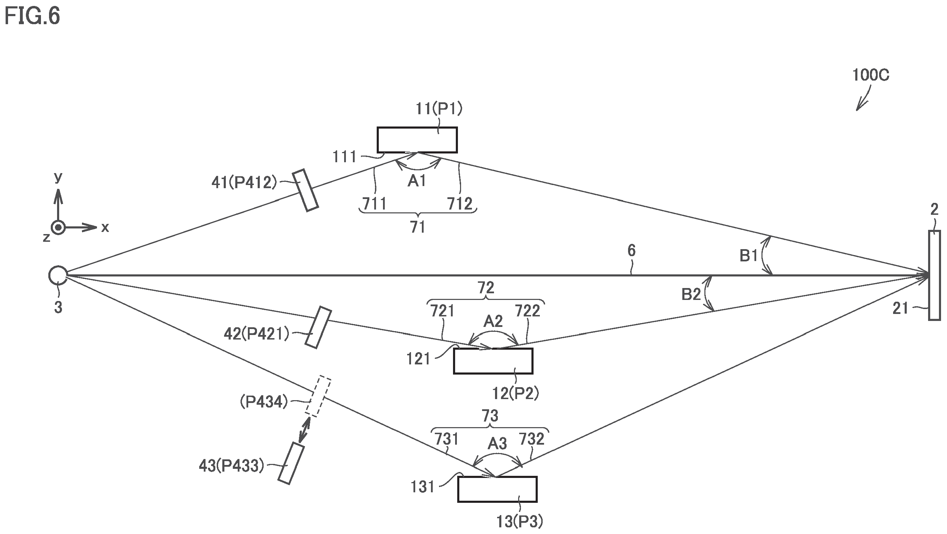

FIG. 6 is a schematic diagram showing a configuration of an X-ray spectrometer according to Modification 2. An X-ray spectrometer 100C includes a third diffraction grating 13 and a third shielding plate 43 in addition to the configuration of the X-ray spectrometer 100 according to Embodiment 1.

The third diffraction grating 13 is installed at a third position P3, and diffracts and disperses the X-ray from the X-ray source 3. More specifically, the third diffraction grating 13 is configured to diffract and disperse the X-ray from the X-ray source 3 at a third diffraction angle A3. The third diffraction grating 13 has a grating surface 131 for diffracting and dispersing the X-ray. More specifically, the third diffraction grating 13 is fixed at the third position P3 which is a specific coordinate position satisfying a condition "diffracting and dispersing the X-ray from the X-ray source 3 at the third diffraction angle A3" in the X-ray spectrometer 100, and an angle of the grating surface 131 with respect to the straight line 6 is also fixed at an angle satisfying the condition. The third diffraction angle A3 is preferably 170° or more and less than 180°, and more preferably, the third diffraction grating 13 in which the third diffraction angle A3 is 170° or more and 179° or less is used.

In Modification 2, the blocking unit includes a third shielding plate 43 in addition to the first shielding plate 41 and the second shielding plate 42. The third shielding plate 43 is, for example, a plate-shaped member formed of a material that does not transmit (shields) an X-ray, and can be arranged at a position P433 that does not block a third optical path 73 and a position P434 that blocks the third optical path 73. The third shielding plate 43 moves between the position P433 and the position P434 by being slid on, for example, a rail not shown. Note that the third shielding plate 43 may block an optical path 731 or an optical path 732 in order to block the third optical path 73.

The control device 91 controls the blocking unit to selectively block the first optical path 71, the second optical path 72, and the third optical path 73. For example, in FIG. 6, the blocking unit blocks each of the first optical path 71 and the second optical path 72, and does not block the third optical path 73.

The third diffraction angle A3 is an angle different from each of the first diffraction angle A1 and the second diffraction angle A2. In other words, the first diffraction grating 11, the second diffraction grating 12, and the third diffraction grating 13 have diffraction angles suitable for dispersing X-rays in energy ranges (different wavelength bands) different from each other. Therefore, by properly using the three diffraction gratings according to the energy range of the X-ray incident from the X-ray source 3, an X-ray having a higher output and a higher resolution than the case of using two diffraction gratings can be made incident on the detector 2. As described above, by increasing the number of diffraction gratings having different diffraction angles, the measurement accuracy can be further improved.

### [Aspects]

It is understood by a person skilled in the art that the plurality of exemplary embodiments described above are specific examples of the following aspects.

(Item 1) An X-ray spectrometer according to an aspect includes a first diffraction grating, a second diffraction grating, a detector, a blocking unit, and a control device. The first diffraction grating is installed at a first position, and diffracts and disperses an X-ray from an X-ray source. The second diffraction grating is installed at a second position, and diffracts and disperses the X-ray from the X-ray source. The detector detects the X-ray diffracted and dispersed by each of the first diffraction grating and the second diffraction grating. The blocking unit is configured to be capable of blocking a first optical path of the X-ray from the X-ray source that is diffracted by the first diffraction grating and is incident on the detector, and a second optical path of the X-ray from the X-ray source that is diffracted by the second diffraction grating and is incident on the detector. The control device controls the blocking unit to selectively block one of the first optical path and the second optical path.

According to the X-ray spectrometer of Item 1, an X-ray diffracted and dispersed by each of a plurality of diffraction gratings fixed respectively at a plurality of predetermined positions can be selectively made incident on the detector. Therefore, a spectroscopic measurement can be performed using a plurality of diffraction gratings without mechanically switching the positions of the plurality of diffraction gratings.

(Item 2) In the X-ray spectrometer according to Item 1, the first diffraction grating diffracts and disperses the X-ray from the X-ray source at a first diffraction angle. The second diffraction grating diffracts and disperses the X-ray from the X-ray source at a second diffraction angle. Each of the first diffraction angle and the second diffraction angle is 170° or more and less than 180°.

According to the X-ray spectrometer of Item 2, an X-ray having an energy of 50 eV or more and 5 keV or less can be dispersed with high output and high resolution.

(Item 3) In the X-ray spectrometer according to Item 2, the detector has a detection surface that detects an incident X-ray. An angle of the detection surface with respect to a straight line connecting the X-ray source and the detector is fixed.

According to the X-ray spectrometer of Item 3, a mechanism for changing the angle of the detection surface can be omitted.

(Item 4) In the X-ray spectrometer according to any one of Items 1 to 3, the blocking unit includes a chopper.

According to the X-ray spectrometer of Item 4, measurement by the first diffraction grating and measurement by the second diffraction grating can be performed almost without a time lag, almost simultaneously.

(Item 5) In the X-ray spectrometer according to any one of Items 1 to 4, the blocking unit includes a first shielding plate and a second shielding plate.

According to the X-ray spectrometer of Item 5, positioning of the blocking unit may be rougher. (Item 6) The X-ray spectrometer according to any one of Items 1 to 5, further including a first slit in the first optical path and a second slit in the second optical path.

According to the X-ray spectrometer of Item 6, only an X-ray emitted from a predetermined position of the X-ray source at a predetermined angle can be made incident on the grating surface. Therefore, it is possible to accurately disperse an X-ray on the grating surface according to its wavelength.

(Item 7) In the X-ray spectrometer according to any one of Items 1 to 6, each of the first diffraction grating and the second diffraction grating is an unequally spaced groove diffraction grating.

According to the X-ray spectrometer of Item 7, an X-ray from the X-ray source can be appropriately dispersed no matter which position on each of the grating surfaces it enters. Therefore, measurement can be performed with high accuracy.

(Item 8) The X-ray spectrometer according to any one of Items 1 to 7, further including a third diffraction grating that is installed at a third position and diffracts and disperses the X-ray from the X-ray source. The blocking unit is further configured to be capable of blocking a third optical path of the X-ray from the X-ray source that is diffracted by the third diffraction grating and is incident on the detector. The control device controls the blocking unit to selectively block the first optical path, the second optical path, and the third optical path.

According to the X-ray spectrometer of Item 8, measurement accuracy can be further improved compared to a case where two diffraction gratings are used.

The embodiments disclosed herein should be considered to be illustrative and non-restrictive in all respects. The scope of the present invention is defined by the terms of the claims, rather than the description above, and is intended to include any modifications within the scope and meaning equivalent to the terms of the claims.

### Reference Signs List

2 Detector, 3 X-ray source, 6 Straight line, 11 First diffraction grating, 12 Second diffraction grating, 13 Third diffraction grating, 21 Detection surface, 41 First shielding plate, 42 Second shielding plate, 49 Chopper, 51 First slit, 52 Second slit, 71 First optical path, 72 Second optical path, 73 Third optical path, 91 Control device, 100, 100A, 100B, 100C X-ray spectrometer, 111, 121, 131 Grating surface, 491 Central axis, 492 Groove, 711, 712, 721, 722, 731, 732 Optical path, 911 Processor, 912 Memory, A1 First diffraction angle, A2 Second diffraction angle, A3 Third diffraction angle, B1 Incident angle, P1 First position, P2 Second position, P3 Third position, P411, P412, P421, P422, P433, P434 Position.

## Claims

1. An X-ray spectrometer comprising:
a first diffraction grating that is installed at a first position and diffracts and disperses an X-ray from an X-ray source;
a second diffraction grating that is installed at a second position and diffracts and disperses the X-ray from the X-ray source;
a detector that detects the X-ray diffracted and dispersed by each of the first diffraction grating and the second diffraction grating;
a blocking unit that is configured to be capable of blocking a first optical path of the X-ray from the X-ray source that is diffracted by the first diffraction grating and is incident on the detector, and a second optical path of the X-ray from the X-ray source that is diffracted by the second diffraction grating and is incident on the detector; and
a control device that controls the blocking unit to selectively block one of the first optical path and the second optical path.

2. The X-ray spectrometer according to claim 1,
wherein the first diffraction grating diffracts and disperses the X-ray from the X-ray source at a first diffraction angle,
the second diffraction grating diffracts and disperses the X-ray from the X-ray source at a second diffraction angle, and
each of the first diffraction angle and the second diffraction angle is 170° or more and less than 180°.

3. The X-ray spectrometer according to claim 2,
wherein the detector has a detection surface that detects an incident X-ray, and
an angle of the detection surface with respect to a straight line connecting the X-ray source and the detector is fixed.

4. The X-ray spectrometer according to claim 1,
wherein the blocking unit includes a chopper.

5. The X-ray spectrometer according to claim 1,
wherein the blocking unit includes a first shielding plate and a second shielding plate.

6. The X-ray spectrometer according to claim 1, further comprising a first slit in the first optical path and a second slit in the second optical path.

7. The X-ray spectrometer according to claim 1,
wherein each of the first diffraction grating and the second diffraction grating is an unequally spaced groove diffraction grating.

8. The X-ray spectrometer according to claim 1, further comprising a third diffraction grating that is installed at a third position and diffracts and disperses the X-ray from the X-ray source,
wherein the blocking unit is further configured to be capable of blocking a third optical path of the X-ray from the X-ray source that is diffracted by the third diffraction grating and is incident on the detector, and
the control device controls the blocking unit to selectively block the first optical path, the second optical path, and the third optical path.
